(19) Europäisches Patentamt
European Patent Office
Office européen des brevets

(11) EP 1 144 100 B1

# (12) EUROPÄISCHE PATENTSCHRIFT

(45) Veröffentlichungstag und Bekanntmachung des Hinweises auf die Patenterteilung:
**29.10.2008 Patentblatt 2008/44**

(21) Anmeldenummer: **99955884.4**

(22) Anmeldetag: **26.10.1999**

(51) Int Cl.:
***B01D 71/52*** *(2006.01)* ***C08L 71/00*** *(2006.01)*
***C08J 5/22*** *(2006.01)* ***H01M 8/02*** *(2006.01)*
***B01J 39/18*** *(2006.01)* ***B01D 61/14*** *(2006.01)*
***B01D 61/42*** *(2006.01)*

(86) Internationale Anmeldenummer:
**PCT/EP1999/008084**

(87) Internationale Veröffentlichungsnummer:
**WO 2000/027513 (18.05.2000 Gazette 2000/20)**

## (54) MEMBRANEN AUS SULFONIERTEM AROMATISCHEN POLYETHERKETON UND POLYBENZIMIDAZOL SOWIE DEREN VERWENDUNG

MEMBRANES MADE OF SULPHONATED POLYETHER KETONE AND POLYBENZIMIDAZOLE, AND THEIR USE

MEMBRANES A POLYETHERCETONE AROMATIQUE SULFONE ET POLYBENZIMIDAZOLE, ET LEUR UTILISATION

(84) Benannte Vertragsstaaten:
**AT BE CH CY DE DK ES FI FR GB GR IE IT LI LU MC NL PT SE**

(30) Priorität: **09.11.1998 DE 19851498**

(43) Veröffentlichungstag der Anmeldung:
**17.10.2001 Patentblatt 2001/42**

(60) Teilanmeldung:
**08014127.8**

(73) Patentinhaber: **BASF Fuel Cell GmbH**
**65926 Frankfurt am Main (DE)**

(72) Erfinder:
- **SOZCKA-GUTH, Thomas**
  **D-89601 Schelklingen (DE)**
- **FRANK, Georg**
  **D-72074 Tübingen (DE)**
- **BAURMEISTER, Jochen**
  **D-24340 Eckernförde (DE)**
- **PAWLIK, Jürgen**
  **D-65931 Frankfurt (DE)**
- **KNAUF, Rüdiger**
  **D-65582 Aull (DE)**

(74) Vertreter: **Luderschmidt, Schüler & Partner**
**Patentanwälte**
**Postfach 3929**
**65029 Wiesbaden (DE)**

(56) Entgegenhaltungen:
**EP-A- 0 688 824** **EP-A- 0 816 415**
**WO-A-96/29360** **WO-A-98/07164**

- **DATABASE WPI Section Ch, Week 199148 Derwent Publications Ltd., London, GB; Class A26, AN 1991-349040 XP002137337 & JP 03 232536 A (TOKYO ELECTRIC POWER CO) , 16. Oktober 1991 (1991-10-16)**
- **JOURNAL OF POLYMER SCIENCE: POLYMER CHEMISTRY EDITION , Bd. 23, 1985, Seiten 2205-2223, XP000601636 in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 144 100 B1

## Beschreibung

Die vorliegende Erfindung betrifft Membranen mit einer Dicke von wenigstens 5 µm enthaltend 30-99,5 Gew.-% eines sulfonierten aromatischen Polyetherketons, das eine Jonenaustauscherkapazität von 1,3 bis 4,0 meq (-$So_3$H) /g Polymer aufweist und 0,5 bis 70 Gew.-% eines Polybenzimidazols; sowie den Einsatz dieser Membranen in Brennstoffzellen.

Brennstoffzellen sind elektrochemische Energieumwandler, die sich besonders durch ihren hohen Wirkungsgrad auszeichnen. Polymerelektrolyt-Brennstoffzellen (nachstehend PEM genannt) zeichnen sich unter den verschiedenen Arten von Brennstoffzellen durch ihre hohe Leistungsdichte und ihr geringes Leistungsgewicht aus.

Herkömmliche Brennstoffzellen arbeiten in der Regel mit Membranen auf der Basis von fluorhaltigen Polymeren, beispielsweise mit dem Material Nafion®.

Für die Kommerzialisierung der Brennstoffzellentechnologie insbesondere für Anwendungen in größerem Maßstab ist es notwendig, die Herstellkosten der zum Einsatz kommenden Materialien zu reduzieren ohne daß dabei eine Einbuße an Leistungsfähigkeit gegenüber den herkömmlich verwendeten Materialien in Kauf genommen werden muß.

Protonenleitende Membranen auf Basis von sulfonierten Polyetherketonen sind bekannt, beispielsweise aus einem Bericht Artikel von A. Steck in Proc. 1st Inter. Symp. On New Materials For Fuel Cell Systems, Montreal 1995, pp 74. oder aus einem Artikel von C.A. Linkous et al. in Int. J. Hydrogen Energy, Vol. 23, No. 7, pp. 525-9 (1998).
In den WO-A-96/29359 und WO-A-96/29360 werden Polymerelektrolyte aus sulfonierten aromatischen Polyetherketonen und die Herstellung von Membranen aus diesen Materialien beschrieben.
In der EP-A-0152161 werden überwiegend aus der Wiederholungseinheit -O-Ar-CO-Ar- bestehende Polyetherketone (nachfolgend PEK genannt) und daraus hergestellte geformte Gebilde beschrieben.

Sulfonierte, streng alternierende Polyetherketone mit der Wiederholungseinheit -O-Ar-CO-Ar- werden in J. Polym. Sci.: Vol. 23, 2205-2222, 1985 beschrieben. Der Aufbau der Polyetherketone geschieht hier durch elektrophilen, und nicht wie in EP-A-0152161 beschrieben, durch nucleophilen Angriff. Die Polymeren wurden durch Sulfurtrioxid unter Verwendung von Triethylphosphat in Dichlorethan sulfoniert. Eine weitere, in dieser Literaturstelle verwendete Sulfonierungsmethode ist die Chlorsulfonierung mit Chlorsulfonsäure. Allerdings wird bei dieser Methode, abhängig vom Grad der Sulfonierung, auch ein Abbau des Molekulargewichtes beobachtet. Es schließt sich die Amidierung des Säurechlorides an. Als mögliches Einsatzgebiet derartiger Polymere wird die Verwendung als lonenaustauscher oder als Entsalzer angegeben. Der Einsatz in Brennstoffzellen wird nicht beschrieben. Eigenschaftsprofile, die den Einsatz in Brennstoffzellen nahelegen, kommen ebenso nicht vor.

Membranen aus homogenen Polymerlegierungen auf Basis von sulfonierten, aromatischen Polyetherketonen, Polyethersulfonen und einem dritten, hydrophilen Polymer sind aus der EP-A-0688824 auch für den Einsatz in elektrochemischen Zellen erwähnt.

Aus der WO-A-98/07164 sind Mischungen aus hochmolekularen Säuren (beispielsweise sulfonierten Polyetherketonen) und hochmolekularen Basen (beispielsweise Polybenzimidazolen) bekannt. Allerdings werden hier nicht die notwendigen Eigenschaftskombinationen aufgezeigt, die erst einen Betrieb in der Brennstoffzelle möglich machen. Auch zielt die dort beschriebene Erfindung auf einen wasserfreien Leitfähigkeitsmechanismus ab, der durch die Wechselwirkung Säure/Base zustande kommt, und der deshalb einen Einsatz dieser Materialien bei Temperaturen über 100° C unter Normaldruck möglich macht.

Die Anwendung von Polybenzimidzolen in der Brennstoffzelle wird bereits von Savinell et al. in J. Electrochemical Soc., 141, 1994, S. L46-L48 beschrieben. Mischungen von verschiedenen Polymeren mit Polybenzimidazolen sind ebenfalls bekannt, z.B. aus der US-A-5,290,884.

Die Eignung aromatischer, nicht fluorierter Polymerer, wozu auch aromatische Polyetherketone gehören, für den Einsatz in Brennstoffzellen wird in der Literatur in Frage gestellt (A. Steck, Proc. 1st Inter. Symp. On New Materials For Fuel Cell Systems, Montreal 1995, pp 74).

Die Eigenschaften von polymeren Materialien durch die Beimischung von weiteren Komponenten zu verändern ist ein allgemein bekanntes Verfahren. Allerdings ist das Eigenschaftprofil von Polymermischungen nur schwer vorherzusehen. Es wird bezweifelt, daß es irgendeine Theorie gibt, die die komplexe Natur von Polymer-Polymer-Wechselwirkungen widerspiegelt (Macomolecules, Vol. 16, 1983, p 753-7).

Mit der Erfindung werden leistungsfähige Membranen bereitgestellt, die aus Zusammensetzungen bestehend aus kostengünstigen Materialien hergestellt werden. Die erfindungsgemäß verwendeten Zusammensetzungen übertreffen die Leistungsfähigkeit der herkömmlich eingesetzten fluorierten Standard-Materialien. Die erfindungsgemäßen Membranen weisen mechanische Eigenschaften und gleichzeitig ausgezeichnete Protonenleitfähigkeit auf.

Diese Eigenschaftskombination ist nicht zu erwarten gewesen und tritt bei anderen Polymermischungen nicht auf. So findet man beispielsweise von Zusammensetzungen aus sulfoniertem Polyetherketon und Polyethersulfon, daß bereits die Zugabe von geringen Mengen an Polyethersulfon zu einem deutlichen Absinken der Protonenleitfähigkeit der Membranen aus diesem Material führt.

Die Zusammensetzungen aus denen die erfindungsgemäßen Membranen hergestellt werden, enthalten 30 - 99,5 Gew.% eines sulfonierten aromatischen Polyetherketons, das eine Ionenaustauscherkapazität von 1,3 bis 4,0 meq ($-SO_3H$)/g Polymer) aufweist, und 0,5-70 Gew.% eines Polybenzimidazols.

Die Ionenaustauscherkapazität (nachstehend auch "IEC" genannt) wird durch Elementaranalyse des gewaschenen und getrockneten Polymeren durch die Bestimmung des Verhältnisses von Kohlenstoff zu Schwefel (C/S-Quotient) ermittelt.

Unter aromatischen Polyetherketonen werden im Rahmen dieser Erfindung alle Polymere verstanden, die Struktureinheiten -Ar-O- und -Ar-CO- aufweisen, worin Ar für einen aromatischen Rest steht. Diese Struktureinheiten können auf verschiedene Art und Weise miteinander verknüpft sein, insbesondere in p-Stellung. Gemäß dem allgemeinen Sprachgebrauch bezeichnet man die erste Einheit als "E" (Ether) und die zweite Einheit als "K" (Keton). Je nach Abfolge der Ether- und Ketoneinheiten unterscheidet man z.B zwischen PEK, PEEK, PEKK oder PEEKK-Typen. Alle diese Polymertypen sind vom Begriff Polyetherketone im Sinne dieser Erfindung umfaßt. Bei den erfindungsgemäß zum Einsatz kommenden sulfonierten aromatischen Polyetherketonen kann es sich um beliebige Polymere handeln, beispielsweise um PEEK, PEKK, PEEKK oder insbesondere um PEK, solange diese die oben definierte Ionenaustauscherkapazität aufweisen.

Besonders bevorzugt werden Zusammensetzungen, bei denen das sulfonierte Polyetherketon die wiederkehrende Einheit der Formel I aufweist

$$-[Ar^1\text{-}O\text{-}Ar^2\text{-}CO]- \qquad (I),$$

worin $Ar^1$ und $Ar^2$ unabhängig voneinander zweiwertige aromatische, gegebenenfalls mit ein oder mehreren unter Einsatzbedingungen inerten einwertigen organischen Gruppen substituierte Reste sind, und wobei zumindest ein Teil der Reste $Ar^1$ und $Ar^2$ mit Resten der Formel $-(SO_3)_wM$ substituiert ist, wobei M ein Metallkation der Wertigkeit w, ein Ammoniumkation oder insbesondere Wasserstoff ist, und w eine ganze Zahl bedeutet, insbesondere 1 oder 2. M ist vorzugsweise ein Kation eines Alkali- oder Erdalkalimetalls.

Bedeuten irgendwelche Reste zweiwertige aromatische Reste, so handelt es sich dabei um ein- oder mehrkernige aromatische Kohlenwasserstoffreste oder um heterocyclisch-aromatische Reste, die ein oder mehrkernig sein können. Im Falle von heterocyclisch-aromatischen Resten weisen diese insbesondere ein oder zwei Sauerstoff-, Stickstoff- oder Schwefelatome im aromatischen Rest auf.

Mehrkernige aromatische Reste können miteinander kondensiert sein oder über C-C-Bindungen oder über Brückengruppen, wie -O-, -S-, -CO-, $-SO_2-$ oder $-C_nH_{2n}-$miteinander verbunden sein, wobei n eine ganze Zahl von 1 bis 10 bedeutet.

Bei den zweiwertigen aromatischen Resten können die Valenzbindungen sich in para- oder in vergleichbarer koaxialer oder paralleler Position oder in meta- oder in vergleichbarer gewinkelter Position zueinander befinden.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind Biphenyl-4,4'-en-Bindungen. Ein Beispiel für parallel, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste $Ar^1$ und $Ar^2$, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen, oder zweikernige kondensierte aromatische Reste mit parallelen, entgegengesetzt gerichteten Bindungen, insbesondere 1,4-, 1,5- und 2,6-Naphthylen, oder zweikernig über eine C-C Bindung verknüpfte aromatische Reste mit koaxialen, entgegengesetzt gerichteten Bindungen, insbesondere 4,4'-Biphenylen.

Die Valenzbindungen, die sich in meta- oder in vergleichbarer gewinkelter Position zueinander befinden, sind gewinkelt angeordnet.

Beispiele für bevorzugte zweiwertige aromatische Reste $Ar^1$ und $Ar^2$, deren Valenzbindungen sich in meta- oder in vergleichbarer gewinkelter Position zueinander befinden, sind einkernige aromatische Reste mit zueinander metaständigen freien Valenzen, insbesondere 1,3-Phenylen, oder zweikernige kondensierte aromatische Reste mit zueinander gewinkelt gerichteten Bindungen, insbesondere 1,6- und 2,7-Naphthylen, oder zweikernig über eine C-C Bindung verknüpfte aromatische Reste mit zueinander gewinkelt gerichteten Bindungen, insbesondere 3,4'-Biphenylen.

Bevorzugte Reste $Ar^1$ und $Ar^2$ sind 1,3-Phenylen oder insbesondere 1,4-Phenylen.

Die aromatischen Reste der erfindungsgemäß zum Einsatz kommenden Polymeren können mit inerten Gruppen substituiert sein. Darunter sind Substituenten zu verstehen, die die ins Auge gefaßte Anwendung nicht negativ beeinflussen.

Beispiele für solche Substituenten sind Alkyl-, Alkoxy-, Aryl-, Amino-, Alkohol-, Ether, Sulfonyl-, Phosphonyl-, Acyl-, Nitro-, Carbonsäure-, Carbonsäureester oder Carbonsäure-amidgruppen oder Halogen.

Unter Alkylgruppen sind verzweigte oder vorzugsweise geradkettige Alkylreste zu verstehen, beispielsweise

Alkyl mit ein bis sechs Kohlenstoffatomen, insbesondere Methyl.

Unter Alkoxygruppen sind verzweigte oder vorzugsweise geradkettige Alkoxyreste zu verstehen, beispielsweise Alkoxyreste mit ein bis sechs Kohlenstoffatomen, insbesondere Methoxy.

Unter Aminogruppen sind Reste der Formel $-NH_2$, $-NHR^1$ oder $-NR^1 R^2$ zu verstehen, worin $R^1$ und $R^2$ unabhängig voneinander Alkyl- oder Arylreste, vorzugsweise Methyl, darstellen.

Unter Alkoholgruppen sind Reste der Formel -OH zu verstehen.

Unter Ethergruppen sind Reste der Formel $R^1$-O- zu verstehen, worin $R^1$ die oben angegebene Bedeutung besitzt.

Unter Sulfonylgruppen sind Reste der Formel $-SO_2R^1$ zu verstehen, worin $R^1$ die oben definierte Bedeutung besitzt.

Unter Phosphonylgruppen sind Reste der Formel $-P(OR^3)_3$ zu verstehen, worin die Reste $R^3$ unabhängig voneinander Wasserstoff, Alkyl oder Aryl sind.

Unter Acylgruppen sind Reste der Formel $-CO-R^3$ zu verstehen, worin $R^3$ die oben definierte Bedeutung besitzt.

Unter Carbonsäuregruppen sind Reste der Formel -COOH zu verstehen.

Unter Carbonsäureestergruppen sind Reste der Formel $-COOR^1$ zu verstehen, worin $R^1$ die oben definierte Bedeutung besitzt.

Unter Carbonsäureamidgruppen sind Reste der Formel $-CONH_2$, $-CONHR^1$ oder - $CONR^1 R^2$ zu verstehen, worin $R^1$ und $R^2$ die oben definierte Bedeutung besitzen.

Bedeuten irgendwelche Reste Halogen, so handelt es sich dabei beispielsweise um Fluor, Brom oder insbesondere um Chlor.

Bevorzugt werden Zusammensetzungen, worin $Ar^1$ und $Ar^2$ Naphthylen oder insbesondere Phenylen sind.

Bevorzugt werden Zusammensetzungen, worin $Ar^1$ und $Ar^2$ mit ein bis vier Amino-, Alkohol-, Ether, Alkyl-, Aryl-, Sulfonyl-, Phosphonyl-, Acyl, Nitro-, Carbonsäure-, Carbonsäureester und/oder Carbonsäureamidgruppen substitutiert sind und/oder worin die Stickstoffatome des Polybenzimidazols mit diesen Gruppen substituiert sind.

Besonders bevorzugt werden Zusammensetzungen verwendet worin das sulfonierte Polyetherketon eine Ionenaustauscherkapazität von 1,6 bis 2,9 meq $(-SO_3H)$/g Polymer) aufweist.

Unter Polybenzimidazolen werden im Rahmen dieser Erfindung alle Polymere verstanden, die wiederkehrenden Struktureinheiten der Formel II aufweisen,

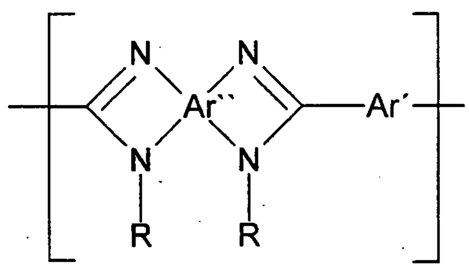

(II)

worin Ar" ein vierwertiger aromatischer Rest, Ar' ein zweiwertiger aromatischer Rest und R Wasserstoff oder ein einwertiger inerter organischer Rest ist.

Bei den zweiwertigen aromatischen Resten Ar' kann es sich wie bei $Ar^1$ und $Ar^2$ um ein- oder mehrkernige aromatische Kohlenwasserstoffreste oder um heterocyclisch-aromatische Reste, die ein- oder mehrkernig sein können, handeln. Bei Ar' können sich die Valenzbindungen in para- oder in vergleichbarer koaxialer oder paralleler Position oder in meta- oder in vergleichbarer gewinkelter Position zueinander befinden. Beispiele für Reste Ar' sind bereits weiter oben bei der Beschreibung der Reste Ar gegeben worden.

Bevorzugte Reste Ar' sind 1,3-Phenylen oder insbesondere 1,4-Phenylen.

Bei den vierwertigen aromatischen Resten Ar" kann es sich ebenfalls um ein- oder mehrkernige aromatische Kohlenwasserstoffreste oder um heterocyclisch-aromatische Reste, die ein- oder mehrkernig sein können, handeln. Bei Ar" sind die Valenzbindungen jeweils paarweise so angeordnet, daß sich die beiden Imidazolringe ausbilden können.

Vorzugsweise befinden sich die jeweils zwei Valenzbindungen in ortho-Position zueinander und diese Paare wiederum befinden sich in gegenüberliegender Position am aromatischen Ring oder am Ringsystem.

Beispiele für bevorzugte Reste Ar" sind Phen-1,2,4,5-ylen, oder Biphen-3,4,3',4'-ylen.

Weitere Polybenzimidazole und bevorzugte Reste Ar" und Ar'sind in der US-A-5,290,884 beschrieben, deren Beschreibung als Teil der vorliegenden Beschreibung gilt.

Die aromatischen Reste Ar' und/oder Ar" der erfindungsgemäß zum Einsatz kommenden Polybenzimidazole können mit inerten Gruppen substituiert sein. Darunter sind Substituenten zu verstehen, die die ins Auge gefaßte Anwendung nicht negativ beeinflussen. Beispiele dafür sind weiter oben bereits für die sulfonierten Polyetherketone bereits aufgezählt.

Besonders bevorzugt wird ein Polybenzimidazol der Formel II, worin Ar Phen-1,2,4,5-ylen oder Biphen-3,4,3',4'-ylen ist, Ar'1,3- oder 1,4-Phenylen bedeutet und R Wasserstoff ist.

Besonders bevorzugt sind Zusammensetzungen, worin der Anteil des Polybenzimidazols in Abhängigkeit vom Sulfonierungsgrad des sulfonierten Polyetherketons ausgewählt wird. Es wurde gefunden, daß es ein optimales Mischungsverhältnis zwischen sulfoniertem Polyetherketon und Polybenzimidazol gibt, das abhängig von der Ionenaustauscherkapazität des verwendeten Polyetherketons ist. Membranen, die aus derartigen Polymermischungen hergestellt wurden, weisen eine optimale Eigenschaftskombination zwischen E-Modul bei 80°C in Wasser, Quellverhalten bei 80°C und Protonenleitfähigkeit auf.

Für sulfonierte PEK-Typen der Formel I wurde gefunden, daß der Anteil des Polybenzimidazols in Abhängigkeit vom Sulfonierungsgrad des sulfonierten Polyetherketons vorzugsweise nach folgender Formel III ausgewählt werden sollte:

$$\text{Gewichtsprozent Polybenzimidazol} = 9{,}4\,x - 12{,}4 \pm (9{,}4\,x - 12{,}4) \times 0{,}5 \quad \text{(III)}.$$

Dabei bedeutet x die Ionenaustauscherkapazität des sulfonierten Polyetherketons in meq ($-SO_3H$)/g Polymer.

Das Molekulargewicht der in den Zusammensetzungen zum Einsatz kommenden Polymeren muß ausreichend sein, daß die Ausbildung von Polymerlösungen möglich ist, aus denen die erfindungsgemäßen Membranen ausgebildet werden können.

Die sulfonierten Polyetherketone weisen Molekulargewichte (Zahlenmittel) im Bereich von 45.000 - 70.000 g/Mol auf, bestimmt durch Gelpermeationschromatographie in NMP mit Salzen unter Polystyrol-Eichung.

Die Polybenzimidazole weisen vorzugsweise eine intrinsische Viskosität im Bereich von 0,8 - 1,2, gemessen bei 25°C, auf.

Die erfindungsgemäßen Membranen weisen üblicherweise eine Dicke von größer gleich 5 μm, vorzugsweise von mehr als 10 μm, besonders bevorzugt von 10 bis 100 μm. Für Anwendungen in der Brennstoffzelle beträgt die Dicke der Membranen in der Regel wenigstens 30 μm.

In Abhängigkeit von der gewünschter Dicke der Membran kommen vorzugsweise Polymerlösungen mit unterschiedlicher Viskosität zum Einsatz. Für Membranen von 5 bis 50 μm Dicke verwendet man vorzugsweise Polymerlösungen mit einer Viskosität von 500 bis 2000 mPas (gemessen bei 80°C in einer Lösung der Polymeren in dem betreffenden Lösungsmittel). Für Membranen von 10 bis 100 μm Dicke verwendet man vorzugsweise Polymerlösungen mit einer Viskosität von 1500 bis 5000 mPas (gemessen bei 80°C in einer Lösung der Polymeren in dem betreffenden Lösungsmittel).

Die so hergestellten Membranen wurden vor allem im Hinblick auf ihre mechanische Stabilität im trockenen und im naßen Zustand, ihre Protonenleitfähigkeit und ihre Leistungen in der Brennstoffzelle überprüft.

Es wurde gefunden, daß sich die erfindungsgemäßen Membranen durch hervorragende elektrische Eigenschaften auszeichnen. Dazu zählen eine Ionenleitfähigkeit von nicht unter 50 mS/cm (gemessen in Kontakt mit flüssigem Wasser bei Raumtemperatur mit Hilfe der 4-Pol Impedanzspektroskopie bei einem Phasenwinkel $|\Theta| < 1$ °).

Es wurde gefunden, daß die Protonenleitfähigkeit bei hervorragenden mechanischen Eigenschaften im Bereich von 120-200 mS/cm bei 80°C liegt (gemessen mit Impedanzspektroskopie in 4-Pol-Technik in reinem Wasser).
Die erfindungsgemäßen Membranen zeichnen sich durch hervorragende mechanische Eigenschaften aus. Dazu zählen ein E-Modul im trocknen Zustand bei 23°C und 50% rel. Feuchte von mindestens 600 MPa, ein E-Modul in Wasser bei 60°C von mindestens 90 MPa, ein E-Modul in Wasser bei 80°C von mindestens 50 MPa und eine Reißdehnung von über 200 %. Die E-Module wurden dabei jeweils als Steigung der Tangente bei 1,2 MPa bestimmt.

Es wurde also gefunden, daß eine Erhöhung der mechanischen Stabilität eintritt. So steigt das im Wasser festgestellte E-Modul (Steigung der Tangente bei 1,2 MPa) bis auf einen Wert von 350 $N/mm^2$ bei 80°C an. Das im Vergleich dazu bei reinen Materialien festgestellte E-Modul betrug lediglich 4-5 $N/mm^2$. Erstaunlicherweise sind bei Mischungen mit PES und PEEK (IEC 1,54 mmol/g Polymer) keine solchen Verhältnisse gefunden worden.

Die erfindungsgemäßen Membranen zeichnen sich ferner durch hervorragende Kochwasserbeständigkeit aus. So wurde gefunden, daß erfindungsgemäßen Membranen auf Basis von sulfoniertem PEK nach einer 72-stündigen Behandlung in kochendem Wasser bei 100°C mechanisch stabil blieben.

Die erfindungsgemäße Membran weist vorzugsweise einen Restgehalt an Lösungmittel von weniger als 0,5 Gew.% auf.

Es wurde gefunden, daß Membranen aus sulfonierten PEEK mit einem IEC ab 1,5 meq ($-SO_3H$)/g (Polymer) (auf Basis von Victrex 450 PF) in kochendem Wasser nur für etwa 2-3 Stunden stabil sind. Überraschenderweise sind Membranen aus sulfonierten Polyetherketonen, z.B. auf Basis von Victrex PEK mit einem vergleichbarem IEC, in kochendem Wasser für mehr als 50 h stabil. Die Erfindung betrifft daher auch ein Polyetherketon vom Typ PEK, das eine Ionenaustauscherkapazität von 1,3 bis 4,0 meq (-$SO_3H$)/g Polymer) aufweist sowie eine daraus hergestellte Membran.

Ferner wurde gefunden, daß die infolge des Fehlens von -O-Ar-O- Einheiten elektronenarme Struktur des Polyetherketon-Polymerrückgrates besonders geeignet für Brennstoffzellenanwendungen zu sein scheint.

Sulfonierte Polyetherketone mit der Wederholungseinheit -O-Ar-CO-Ar- lassen sich derzeit im technischen Maßstab bis etwa zu einem IEC von 4,0 meq (-$SO_3H$)/g (Polymer) herstellen.

Es wurde gefunden, daß Membranen aus solchen hochsulfonierten Polymeren oder Membranen aus Zusammensetzungen enthaltend solche hochsulfonierte Polymere und Polybenzimidazole besonders für Brennstoffzellen mit niedriger oder keiner Befeuchtung zum Einsatz kommen können. Die Erfindung betrifft somit auch die Verwendung der Membranen in Brennstoffzellen.

Die erfindungsgemäße Membran ist erhältlich, indem

a) eine Lösung enthaltend 30 - 99,5 Gew.% eines Salzes eines sulfonierten Polyetherketons und 0,5-70 Gew.% eines Polybenzimidazols durch Auflösen der beiden Polymeren in einem geeigneten organischen Lösungsmittel, insbesondere Dimethylsulfoxid, N,N-Dimethylformamid, N,N-Dimethylacetamid oder N-Methyl-2-pyrrolidon hergestellt wird,

b) diese Lösung nach an sich bekannten Verfahren, wie Gießen, Rakeln, Sprühen oder Schleudern zu einer Membran verformt wird, und

c) die gemäß b) erhaltene Membran mit Wasser oder einer verdünnten 0,1 - 20% igen Säure gewaschen wird.

Mischungen von Polybenzimidazolen und sulfonierten Polyetherketonen neigen, durch die vorhandene Säure-Base Wechselwirkung zur spontanen Gelation und können daher auch bei erhöhter Temperatur nicht oder nur schwer zu flächigen Gebilden wie Membranen weiterverarbeitet werden.
Eine homogene Lösung von sulfonierten Polytherketonen und Polybenzimidazolen kann man durch Einsatz der Salze, vorzugsweise der Li-, Na-, K- und Ammoniumsalze, der Sulfonsäuren und Polybenzimidazol in trocknen organischen Lösungsmitteln, bevozugt DMSO, DMF, DMAc, NMP, herstellen. Die so erhaltene Lösung des Blends kann auf einen Träger aufgebracht werden und bei Temperaturen bis zu 160°C getrocknet werden.

Trotz des beschriebenen Umweges über die Salze der Sulfonsäure ist die beschriebene Herstelltechnik von großem Interesse, da mit diesen Membranen mit der Eigenschaftskombination hohe Protonenleitfähigkeit und hohes E-Modul bei 80°C in Wasser sowie geringem Quellverhalten hergestellt werden können.

Die Membran wird durch Konditionieren mit einer verdünnten Säure, bevorzugt eine verdünnte Mineralsäure, wie einer 0,1 - 20 % igen Säure (Schwefelsäure, Phosphorsäure, Salpetersäure), in die Säureform der Sulfonsäure überführt. Gleichzeitig werden durch diese Behandlung ionische (Salze) und organische Verunreinigungen (Lösungsmittelreste) entfernt.

Alternativ kann die Ammoniumform der Membran durch thermische Spaltung der Ammoniumgruppe (Freisetzung von $NH_3$) in die Säureform übergeführt werden.

Wahlweise kann die nach der oben beschriebenen Vorbehandlung erhaltene Membran noch mit Wasser gespült werden.

Danach kann die Membran durch Erhitzen getrocknet werden, bis z.B. der Restgehalt an Lösungmittel kleiner als 0,5 Gew.% beträgt. Eine weitere bevorzugte Variante der Herstellung der erfindungsgemäßen Membran besteht darin, daß die Lösung enthaltend 30 - 99,5 Gew.% des Salzes des sulfonierten Polyetherketons und 0,5 - 70 Gew.% des Polybenzimidazols in ein saugfähiges Vlies eingebracht wird, und das Lösungsmittel anschließend durch Verdampfen entfernt wird.

Die erfindungsgemäßen Membranen können naß und trocken zur Weiterverarbeitung eingesetzt werden.

Die folgenden Beispiele erläutern die Erfindung ohne diese zu begrenzen.

Beispiel 1:

Es wurden die Werte für die Protonenleitfähigkeit von Mischungen mit sulfoniertem PEK und PBI ermittelt. Das PEK wies einen IEC von 2,12 meq (-$SO_3H$)/g (Polymer) auf. Die Protonenleitfähigkeit wurde mit einer 4-Pol Anordnung gemessen. Das verwendete Elektrodenmaterial war Platin. Die Membran wurde während der Messung mit temperierten, vollentsalztem Wasser überströmt. Dicke und Breite der Membran wurden im naßen Zustand bei Raumtemperatur, nach der Behandlung mit 10 %iger Salpetersäure bei 40°C und Waschen mit vollentsalztem Wasser bei Raumtemperatur, bestimmt.

Das verwendete Meßgerät war ein Zahner IM 5d, umgerüstet für die Messung in einer 4-Pol Anordnung.

Die nachfolgende Tabelle zeigt die ermittelten Leitfähigkeitswerte für Membranen aus unterschiedlichen erfindungsgemäße Zusammensetzungen an.

| Temperatur (°C) | 5%PBI in PEKT2 | 6%PBI in PEKT2 | 7,5%PBI in PEKT2 | 10%PBI in PEKT2 | 20%PBI in PEKT2 |
|---|---|---|---|---|---|
| | Leitf. (S/cm) | Leitf. (S/cm) | Leitf. (S/cm) | Leitf. (S/cm) | Leitf. (S/cm) |
| 23 | 0,056282855 | 0,032303263 | 0,020937892 | 0,013605442 | 0,003425338 |
| 30 | 0,06373923 | 0,037894398 | 0,025139398 | 0,016196955 | 0,004068961 |
| 40 | 0,075557805 | 0,045612115 | 0,030444042 | 0,019729946 | 0,004964972 |
| 50 | 0,090157708 | 0,053875319 | 0,035936192 | 0,023627396 | 0,005839962 |
| 60 | 0,120093433 | 0,072562358 | 0,043677182 | 0,028423626 | 0,00668619 |
| 70 | 0,165000165 | 0,104427736 | 0,065316573 | 0,03554655 | 0,007445129 |
| 80 | 0,212844755 | 0,153029799 | 0,094613645 | 0,044791579 | 0,008032903 |
| 80 | 0,21159084 | 0,162716718 | 0,101837142 | 0,047391961 | 0,007758072 |
| 70 | 0,193606813 | 0,146548329 | 0,0927432 | 0,046527588 | 0,006821236 |
| 60 | 0,178111123 | 0,131412736 | 0,082758164 | 0,037013218 | 0,006063031 |
| 50 | 0,159793228 | | 0,073186886 | 0,033942891 | 0,005317593 |
| 40 | 0,143398472 | 0,101506097 | 0,063428635 | 0,028582862 | 0,004400614 |
| 30 | 0,12434795 | | 0,053606943 | 0,023420644 | 0,00363643 |
| 25 | 0,116734811 | 0,077666133 | 0,046482549 | 0,02159594 | 0,003248673 |

Beispiel 2: Herstellung der Blends am Beispiel der unter 1. eingesetzten Membran

Das gemahlene sulfonierte Polymer wurde in einen Überschuß an 1 molarer Natronlauge eingetragen und bis auf eine Temperatur von 40 - 80°C erwärmt. Das Natriumsalz des sulfonsauren Polymers wurde über eine Nutsche abgesaugt und überschüssige Natronlauge abgepreßt. Schließlich wurde das Polymer neutral gewaschen und bis zur Gewichtskonstanz getrocknet.

Mit dem trocknen Polymer wurde mit Hilfe eines Zahnscheibenrührers eine 15-20 %ige Lösung in NMP hergestellt. Die klare Lösung wurde mit dem entsprechendem Anteil einer 15%igen Lösung von PBI in DMAc (hergestellt nach EP-A-816,415) versetzt und für mindestens 1 h mit einem Zahnscheibenrührer gerührt.

Nach der Filtration über ein PET-Tiefenfilter mit einer mittleren Porenweite von 0,7 µm bei 80°C wurde die Lösung auf eine Glasplatte durch Rakeln aufgebracht und in einem Umlufttrockenschrank bei Temperaturen zwischen 80 und 140°C über Nacht getrocknet.

Nach der Trocknung wurde die Folie von der Glasplatte getrennt und das Natriumsalz durch Behandlung mit 1 molarer Schwefelsäure bei 40°C entfernt. Die Membranen wurden mit vollentsalztem Wasser neutral gewaschen und getrocknet.

Beispiel 3: Sulfonierung von PEK

3,49 kg 98%ige Schwefelsäure wurden in einem beheizbaren Doppelmantelreaktiongefäß vorgelegt. Unter Rühren mit einer Zahnscheibe wurden möglich schnell 400 g Victrex PEK in die Lösung eingetragen. Die Temperatur wurde auf 50°C erhöht. Sobald eine klare, rote Lösung erhalten worden war, wurden 2,40 kg Oleum (20 % freies $SO_3$) zugegeben. Sobald der gewünschte Sulfonierungsgrad (bei einem IEC von 2,12 meq (-$SO_3$H)/g (Polymer) etwa nach 1-2 Stunden) erreicht worden war, wurde die Lösung auf 20°C abgekühlt und das Polymer in destilliertem Wasser ausgefällt.

Das Polymer wurde abgesaugt, neutral gewaschen (Test mit $BaCl_2$-Lösung) und bei 60 - 120°C im Umlufttrokkenschrank getrocknet.

Beispiel 4: Mechanische Daten der nach Beispiel 3 hergestellten Membranen

| IEC des PEK | Gehalt an PBI [%] | E-Modul, 23°C, 50 % rel. Feuchte [MPa] | Reißdehnung [%] | E-Modul 60°C, Wasser* [MPa] | Reißdehnung [%] |
|---|---|---|---|---|---|
| | | | | | |
| 2.12 | 0 | 695 | 121 | 7 | 200 |
| 2.12 | 5 | 1140 | 72 | 536 | 284 |
| 2.12 | 7.5 | 725 | 30 | 158 | 288 |
| 2.12 | 10 | 646 | 28 | 195 | 300 |
| 2.12 | 12.5 | 1445 | 111 | 124 | 370 |
| 2.12 | 17.5 | 636 | 26 | 110 | 231 |
| 2.12 | 20 | 1058 | 40 | 100 | 235 |
| *gemessen in Wasser, E-Modul in Wasser bestimmt als Steigung der Tangente bei 1,2 MPa | | | | | |

**Patentansprüche**

1. Membran mit einer Dicke von wenigstens 5 μm enthaltend

   (i) 30 - 99,5 Gew.% eines sulfonierten aromatischen Polyetherketons, das eine Ionenaustauscherkapazität von 1,3 bis 4,0 meq ($-SO_3H$)/g Polymer aufweist und dessen Molekulargewicht als Zahlenmittel im Bereich von 45.000 bis 70.000 g/Mol beträgt, und
   (ii) 0,5-70 Gew.% eines Polybenzimidazols erhältlich durch ein Verfahren umfassend folgende Maßnahmen:

      a) Herstellung einer Lösung enthaltend 30 - 99,5 Gew.% eines sulfonierten Polyetherketons und 0,5-70 Gew.% eines Polybenzimidazols durch Auflösen des Salzes des sulfonierten Polyetherketons und des Polybenzimidazols in einem geeigneten organischen Lösungsmittel,
      b) Erzeugen einer Membran mit der gemäß Maßnahme a) erhaltenen Lösung mittels an sich bekannten Verfahren
      c) Waschen der gemäß Maßnahme b) erhaltenen Membran mit Wasser oder einer verdünnten 0,1 - 20 % igen Säure

2. Membran nach Anspruch 1, **dadurch gekennzeichnet, daß** diese eine Dicke von wenigstens 30 μm aufweist.

3. Membran nach Anspruch 1, **dadurch gekennzeichnet, daß** diese eine Ionenleitfähigkeit, gemessen in Kontakt mit flüssigem Wasser bei Raumtemperatur mit Hilfe der 4-Pol Impedanzspektroskopie bei einem Phasenwinkel $|\Theta| < 1°$, von nicht unter 50 mS/cm aufweist.

4. Membran nach Anspruch 1, **dadurch gekennzeichnet, daß** diese einen E-Modul bestimmt als Steigung der Tangente bei 1,2 MPa im trocknen Zustand bei 23°C und 50% rel. Feuchte von mindestens 600 MPa aufweist.

5. Membran nach Anspruch 1, **dadurch gekennzeichnet, daß** diese einen E-Modul bestimmt als Steigung der Tangente bei 1,2 MPa in Wasser bei 60°C von mindestens 90 MPa und eine Reißdehnung von über 200 % aufweist.

6. Membran nach Anspruch 1, **dadurch gekennzeichnet, daß** diese einen Restgehalt an Lösungmittel von weniger als 0,5 Gew.% aufweist.

7. Membran nach Anspruch 1, **dadurch gekennzeichnet, daß** ein sulfoniertes Polyetherketon enthaltend wiederkehrende Einheiten der Formel I

   -[Ar1-O-Ar2-CO]- (I),

   worin

Ar1 und Ar2 unabhängig voneinander zweiwertige aromatische oder heteroaromatische, gegebenenfalls mit ein oder mehreren unter Einsatzbedingungen inerten einwertigen organischen Gruppen substituierte Reste sind, und wobei zumindest ein Teil der Reste Ar1 und Ar2 mit Resten der Formel -(SO3)WM substituiert ist, wobei M ein Metallkation der Wertigkeit w, oder ein Ammoniumkation ist und w eine ganze Zahl 1 oder 2 bedeutet, eingesetzt wird.

**8.** Membran nach Anspruch 7, **dadurch gekennzeichnet, daß** $Ar^1$ und $Ar^2$ Naphthylen oder insbesondere Phenylen sind.

**9.** Membran nach Anspruch 7, **dadurch gekennzeichnet, daß** $Ar^1$ und $Ar^2$ mit ein bis vier Amino-, Alkohol-, Ether-, Alkyl-, Aryl-, Sulfonyl-, Phosphonyl-, Carbonyl-, Nitro-, Carbonsäuregruppen substitutiert sind und/oder daß die Stickstoffatome des Polybenzimidazols mit diesen Gruppen substituiert sind.

**10.** Membran nach Anspruch 1, **dadurch gekennzeichnet, daß** das Polybenzimidazol wiederkehrenden Struktureinheiten der Formel II aufweist

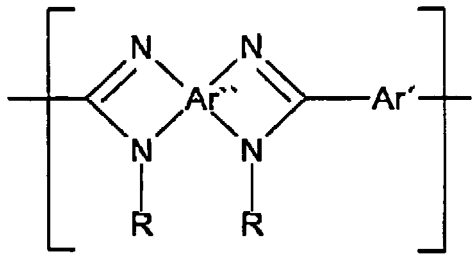

(II)

worin Ar" ein vierwertiger aromatischer Rest, Ar’ ein zweiwertiger aromatischer Rest und R Wasserstoff oder ein einwertiger inerter organischer Rest ist.

**11.** Membran nach Anspruch 10, **dadurch gekennzeichnet, daß** Ar" Phen-1,2,4,5-ylen oder Biphen-3,4,3’,4’-ylen ist, Ar’1,3- oder 1,4-Phenylen bedeutet und R Wasserstoff ist.

**12.** Membran nach Anspruch 1, **dadurch gekennzeichnet, daß** als sulfoniertes aromatisches Polyetherketon ein Polymer vom Typ PEK, das eine Ionenaustauscherkapazität von 1,3 bis 4,0 meq (-S03H)/g Polymer aufweist eingesetzt wird.

**13.** Membran nach Anspruch 1, **dadurch gekennzeichnet, daß** das sulfonierte Polyetherketon in Form des Lithium, Natrium, Kalium oder Ammoniumsalz eingesetzt wird.

**14.** Membran nach Anspruch 1, **dadurch gekennzeichnet, daß** der Anteil des Polybenzimidazols in Abhängigkeit vom Sulfonierungsgrad des sulfonierten Polyetherketons nach folgender Formel III ausgewählt wird:

$$\text{Gewichtsprozent Polybenzimidazol} = 9{,}4\,x - 12{,}4 \pm (9{,}4\,x - 12{,}4) \times 0{,}5 \quad \text{(III)},$$

wobei x die Ionenaustauscherkapazität des sulfonierten Polyetherketons in meq (-SO3H)/g Polymer) bedeutet.

**15.** Membran nach Anspruch 1, **dadurch gekennzeichnet, daß** die gemäß Maßnahme a) erhaltene Lösung eine Viskosität von 500 - 5000 mPas gemessen bei 80°C in einer Lösung der Polymeren in N-Methylpyrrolidon mit einem Rotationsviskosimeter nach Couette aufweist.

**16.** Membran nach Anspruch 1, **dadurch gekennzeichnet, daß** gemäß Maßnahme c) Salpetersäure, Schwefelsäure oder Phosphorsäure eingesetzt werden.

**17.** Verwendung der Membran nach einem der Ansprüche 1 bis 16 für den Einsatz in Brennstoffzellen, insbesondere für den Einsatz in Direkt-Methanol-Brennstoffzellen.

## Claims

1. A membrane having a thickness of at least 5 $\mu$m, containing

   (i) from 30 to 99.5% by weight of a sulfonated aromatic polyether ketone which has an ion-exchange capacity of from 1.3 to 4.0 meq (-S03H)/g of polymer, and whose number average of molar mass lies in the range from 45,000 to 70,000 g/mol
   (ii) from 0.5 to 70% by weight of a polybenzimidazole, obtainable by a process comprising the following measures:

   a) preparing a solution containing from 30 to 99.5% by weight of a sulfonated polyether ketone and from 0.5 to 70% by weight of a polybenzimidazole by dissolving the salt of the sulfonated polyether ketone and the polybenzimidazole in a suitable organic solvent,
   b) using the solution obtained according to measure a) to produce a membrane by means of processes known per se,
   c) washing the membrane obtained according to measure b) with water or with a dilute acid of from 0.1 to 20% strength.

2. The membrane according to claim 1, **characterized in that** it has a thickness of at least 30 $\mu$m.

3. The membrane according to claim 1, **characterized in that** it has an ion-conductivity, measured in contact with liquid water at room temperature with the aid of 4-pole impedance spectroscopy at a phase angle $|\Theta| < 1°$, of not less than 50 mS/cm.

4. The membrane according to claim 1, **characterized in that** it has a modulus of elasticity, determined as gradient of the tangent at 1.2 MPa, in the dry state of at least 600 MPa at 23°C and 50% relative humidity.

5. The membrane according to claim 1, **characterized in that** it has a modulus of elasticity, determined as gradient of the tangent at 1.2 MPa, in water at 60°C of at least 90 MPa, and an ultimate elongation of more than 200%.

6. The membrane according to claim 1, **characterized in that** it has a residual solvent content of less than 0.5% by weight.

7. The membrane according to claim 1, **characterized in that** use is made of a sulfonated polyether ketone containing repeat units of formula I

   -[Ar1-O-Ar2-CO]-     (I),

   wherein
   Ar1 and Ar2, independently of one another, are bivalent, aromatic or heteroaromatic radicals, which are optionally substituted by one or more monovalent organic groups which are inert under conditions of use, and wherein at least a portion of the radicals Ar1 and Ar2 is substituted by radicals of the formula -(S03)wM, where M is a metal cation of valency w, or an ammonium cation, and w is the integer 1 or 2.

8. The membrane according to claim 7, **characterized in that** Ar1 and Ar2 are naphthylene or in particular phenylene.

9. The membrane according to claim 7, **characterized in that** Ar1 and Ar2 are substituted by from one to four amino, alcohol, ether, alkyl, aryl, sulfonyl, phosphonyl, carbonyl, nitro or carboxylic acid groups, and/or that the nitrogen atoms of the polybenzimidazole are substituted by these groups.

10. The membrane according to claim 1, **characterized in that** the polybenzimidazole has repeat structural units of the formula II

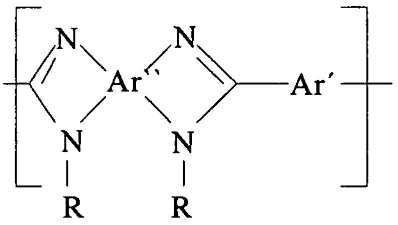 (II)

where Ar'' is a tetravalent aromatic radical, Ar' is a bivalent aromatic radical and R is hydrogen or an inert monovalent organic radical.

**11.** The membrane according to claim 10, **characterized in that** Ar'' is 1,2,4,5-phenylene or 3,4,3',4'-biphenylene, Ar' is 1,3- or 1,4-phenylene and R is hydrogen.

**12.** The membrane according to claim 1, **characterized in that** the sulfonated aromatic polyether ketone used is a polymer of the PEK type which has an ion-exchange capacity of from 1.3 to 4.0 meq (-SO3H)/g of polymer.

**13.** The membrane according to claim 1, **characterized in that** the sulfonated polyether ketone is used in the form of its lithium, sodium, potassium or ammonium salt.

**14.** The membrane according to claim 1, **characterized in that** the proportion of the polybenzimidazole is selected depending on the degree of sulfonation of the sulfonated polyether ketone according to formula III below:

$$\text{percent by weight of polybenzimidazole} = 9.4x - 12.4 \pm (9.4x - 12.4) \times 0.5 \quad \text{(III)},$$

where x is the ion-exchange capacity of the sulfonated polyether ketone in meq (-S03H)/g of polymer.

**15.** The membrane according to claim 1, **characterized in that** the solution obtained in measure a) has a viscosity of from 500 to 5000 mPas measured at 80°C in a solution of the polymer in N-methylpyrrolidone using a Couette rotary viscometer.

**16.** The membrane according to claim 1, **characterized in that** nitric acid, sulfuric acid or phosphoric acid are used according to measure c).

**17.** The use of the membrane according to any one of claims 1 to 16 for application in fuel cells, in particular for application in direct methanol fuel cells.

**Revendications**

**1.** Membrane avec une épaisseur d'au moins 5 μm, qui consiste en

(i) 30 à 90,5 % en poids d'une polyéthercétone aromatique sulfonée, présentant une capacité d'échangeur d'ions de 1,3 jusqu'à 4,0 milliéquivalents (-$SO_3$H)/g (polymère) et dont le poids moléculaire (moyen en nombre), est compris entre 45.000 et 70.000 g/Mol, et
(ii) en 0,5 à 70 % en poids d'un polybenzimidazole, obtenue selon un procédé comprenant les étapes suivantes:

a) fabrication d'une solution comprenant 30 à 90,5 % en poids d'une polyéthercétone sulfonée et 0,5 à 70 % en poids d'un polybenzimidazole, par dissolution des sels du polyéthercétone sulfonée et du polybenzimidazole, dans un solvant organique approprié,
b) fabrication d'une membrane à partir de la solution obtenue selon l'étape a), par le moyen des procédés connus,
c) lavage de la membrane obtenue selon l'étape b), avec de l'eau ou bien avec un acide dilué à 0,1-20%

2. Membrane selon revendication 1, **caractérisée en ce que** cette dernière présente une épaisseur d'au moins 30 µm.

3. Membrane selon revendication 1, **caractérisée en ce que** cette dernière, présente une conductivité ionique qui dépasse 50 mS/cm, mesurée en contact d'eau liquide à une température ambiante à l'aide de la technique-4-pol de la spectroscopie d'impédance à un angle de phase $|\Theta| < 1°$.

4. Membrane selon revendication 1, **caractérisée en ce que** cette dernière, présente un module d'élasticité d'au moins 600 MPa, déterminé comme accroissement de la tangente à 1,2 MPa, à l'état séché, à 23°C et 50 % d'humidité relative.

5. Membrane selon revendication 1, **caractérisée en ce que** cette dernière, présente un module d'élasticité d'au moins 90 MPa, déterminé comme accroissement de la tangente à 1,2 MPa, dans de l'eau à 60°C, et une élongation de rupture supérieur à 200%.

6. Membrane selon revendication 1, **caractérisée en ce que** cette dernière, présente une teneur en reste de solvant inférieure à 0,5% en poids.

7. Membrane selon revendication 1, **caractérisée en ce que** une polyéthercétone sulfonée comportant des unités répétitives de formule I

-[Ar1-O-Ar2-CO]- (I),

où, Ar1 et Ar2 sont deux restes aromatique ou hétéro-aromatiques, bivalents, indépendants l'un de l'autre, substitués le cas échéant, sous les conditions d'utilisation, avec un ou plusieurs groupements organiques monovalents inertes, non réactifs, étant donné qu'au moins une partie des restes Ar1 et Ar2 est substituée avec des restes de la formule -(S03)WM, où M est un cation métallique avec une valence w ou bien un cation de type ammonium, et w est un nombre entier, en particulier, 1 ou 2, est utilisée.

8. Membrane selon revendication 7, **caractérisée en ce que** Ar1 et Ar2, sont des naphtylènes ou de préférence phénylènes.

9. Membrane selon revendication 7, **caractérisée en ce que** Ar1 et Ar2 sont substitués par un, à quatre groupements amino, alcool, éther, alcyle, aryle, sulfonyle, phosphonyle, carbonyle, nitro, acide carbonique, et/ou que les atomes d'azote du polybenzimidazole sont substitués par ces groupements.

10. Membrane selon revendication 1, **caractérisée en ce que** le polybenzimidazole présente des unités de structures répétitives de la formule II,

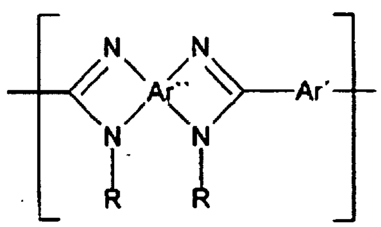

(II)

où Ar'' représente un reste aromatique quadrivalent, Ar' un reste aromatique bivalent et R représente un hydrogène ou bien un reste monovalent organique inerte.

11. Membrane selon revendication 10, **caractérisée en ce que** Ar'' est un - 1,2,4,5- phénylène, ou bien -3,4,3',4'-biphénylène, Ar' est un 1,3- ou bien 1,4- phénylène, et R est un hydrogène.

12. Membrane selon revendication 1, **caractérisée en ce que** un polymère de type PEK, présentant une capacité d'échangeur d'ions de 1,3 jusqu'à 4,0 milliéquivalents $(-SO_3H)$/g (polymère), est utilisé en tant que polyéthercétone aromatique.

**13.** Membrane selon revendication 1, **caractérisée en ce que** la polyéthercétone sulfonée est utilisée en forme de sels de lithium, sodium, potassium ou bien ammonium.

**14.** Membrane selon revendication 1, **caractérisée en ce que** la teneur en polybenzimidazole est choisie en fonction du degré de sulfonation de la polyéthercétone selon la formule III suivante :

$$\text{Pourcentage en poids du polybenzimidazole} = 9{,}4x - 12{,}4 \pm (9{,}4x - 12{,}4) \times 0{,}5 \quad \text{(III).}$$

où x représente la capacité d'échangeur d'ions de la polyéthercétone sulfonée en milliéquivalents ($-SO_3H$)/g (polymère).

**15.** Membrane selon revendication 1, **caractérisée en ce que** la solution obtenue selon étape a), présente une viscosité de 500 - 5000 mPas, mesurée à 80°C dans une solution de polymères dans le N-méthylpyrolidone, avec un viscosimètre rotationnel de Couette.

**16.** Membrane selon revendication 1, **caractérisée en ce que** selon l'étape c), de l'acide salpêtre, de l'acide sulfurique ou bien de l'acide phosphorique est utilisé.

**17.** Utilisation de la membrane selon l'une des revendications 1 à 16 pour son application dans des piles à combustible, particulièrement dans des piles à combustibles à méthanol direct.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9629359 A
- WO 9629360 A
- EP 0152161 A
- EP 0688824 A
- WO 9807164 A
- US 5290884 A
- EP 816415 A


### In der Beschreibung aufgeführte Nicht-Patentliteratur


- **VON A. STECK.** *Proc. 1st Inter. Symp. On New Materials For Fuel Cell Systems,* 1995, 74
- **VON C.A. LINKOUS et al.** *Int. J. Hydrogen Energy,* 1998, vol. 23 (7), 525-9
- *J. Polym. Sci.,* 1985, vol. 23, 2205-2222
- **SAVINELL et al.** *J. Electrochemical Soc.,* 1994, vol. 141, S. L46-L48
- **A. STECK.** *Proc. 1st Inter. Symp. On New Materials For Fuel Cell Systems,* 1995, 74
- *Macomolecules,* 1983, vol. 16, 753-7